# FASCICULE DE BREVET EUROPEEN

(11) **EP 2 795 830 B1**
(45) Date de publication et mention de la délivrance du brevet: **08.04.2020**
(21) Numéro de dépôt: 12810359.5
(22) Date de dépôt: 06.12.2012
(51) Int. Cl.: H04L 9/08, G06F 21/36, H04L 9/32, H04L 29/06

(54) **PROCEDE D'ECHANGE DE DONNEE CHIFFREE ENTRE UN TERMINAL ET UNE MACHINE**
VERFAHREN FÜR VERSCHLÜSSELTEN DATENAUSTAUSCH ZWISCHEN EINEM ENDGERÄT UND EINER MASCHINE
METHOD OF ENCRYPTED DATA EXCHANGE BETWEEN A TERMINAL AND A MACHINE

(30) Priorité: 09.12.2011 FR 1161430
(43) Date de publication de la demande: 29.10.2014
(73) Titulaire: Evidian, 78340 Les Clayes Sous Bois (FR)
(72) Inventeur: DEDIEU, Gérard, F-78180 Montigny La Bretonneux (FR); COSSARD, David, F-95490 Vauréal (FR); BERETTI, François, F-92120 Montrouge (FR)
(74) Mandataire: Camus, Olivier Jean-Claude
(86) Numéro de dépôt international: PCT/FR2012/052820
(87) Numéro de publication internationale: WO 2013/083923

(56) Documents cités:
- EP-A1- 2 364 043
- WO-A1-2010/116109
- WO-A2-2008/064909
- AU-A1- 2010 240 822
- MCCUNE J M ET AL: "Seeing-Is-Believing: Using Camera Phones for Human-Verifiable Authentication", SECURITY AND PRIVACY, 2005 IEEE SYMPOSIUM ON OAKLAND, CA, USA 08-11 MAY 2005, PISCATAWAY, NJ, USA,IEEE, 8 mai 2005 (2005-05-08), pages 110-124, XP010798367, DOI: 10.1109/SP.2005.19 ISBN: 978-0-7695-2339-2
- MENEZES A ET AL: "Handbook of Applied Cryptography , IDENTIFICATION AND ENTITY AUTHENTICATION", 1 janvier 1997 (1997-01-01), HANDBOOK OF APPLIED CRYPTOGRAPHY; [CRC PRESS SERIES ON DISCRETE MATHEMATICES AND ITS APPLICATIONS], CRC PRESS SERIES ON DISCRETE MATHEMATICS AND ITS APPLICATIONS, BOCA RATON, FL, US, PAGE(S) 385 - 424, XP002262234, ISBN: 978-0-8493-8523-0 pages 402-404

## Description

### DOMAINE TECHNIQUE DE L'INVENTION

La présente invention concerne un procédé d'échange d'une donnée chiffrée entre un terminal et une machine.

Elle concerne également un terminal adapté pour mettre en œuvre ledit procédé.

Elle trouve une application particulière mais non limitative dans le domaine de la sécurité des accès informatiques au moyen de chiffrement de données utilisant des clefs privée et publique.

### ARRIERE-PLAN TECHNOLOGIQUE DE L'INVENTION

Dans le domaine de la sécurité des accès informatiques, un procédé d'échange d'une donnée chiffrée entre un terminal et une machine bien connu de l'homme du métier utilise une carte à puce et un terminal tel qu'un lecteur de carte à puce connecté à une machine tel qu'un poste de travail. Le propriétaire de la carte à puce doit saisir un code PIN pour demander le déchiffrement d'une donnée chiffrée à la carte. Un tel procédé est par exemple utilisé par un utilisateur pour s'authentifier auprès de son poste de travail, la donnée chiffrée étant dans ce cas son identifiant/mot de passe.

Un inconvénient de ce procédé est que le périphérique de lecture de la carte à puce doit être disponible là où l'utilisateur souhaite s'authentifier.

Le document AU 2010 240 822 A1 décrit un procédé de transfert d'une donnée secrète d'un ordinateur à un dispositif mobile à l'aide d'un code barre.

### DESCRIPTION GENERALE DE L'INVENTION

La présente invention a pour but un procédé d'échange d'une donnée chiffrée entre un terminal et une machine qui permette à un utilisateur de ne plus avoir à se préoccuper de retenir son mot de passe.

L'invention est définie par les adjointes revendications.

Selon un premier objet de l'invention, ce but est atteint par un procédé d'échange d'une donnée chiffrée entre un terminal et une machine, le procédé comportant les étapes de :
- récupérer par le terminal un premier code de chiffrement image comprenant ladite donnée chiffrée à partir d'une clef publique, ledit premier code de chiffrement image ayant été généré par ladite machine ;
- décoder ledit premier code de chiffrement image dans ledit terminal pour obtenir ladite donnée chiffrée ;
- déchiffrer ladite donnée chiffrée au moyen d'une clef privée enregistrée dans ledit terminal, ladite clef privée ayant été obtenue à partir d'un deuxième code de chiffrement image généré par ladite machine.

Comme on va le voir en détail par la suite, le fait d'utiliser un code de chiffrement image permet d'envoyer la clef privée à un terminal qui va l'utiliser par la suite pour déchiffrer une donnée chiffrée, cette dernière étant également récupérée par le terminal au moyen d'un code de chiffrement image. L'utilisateur n'a plus besoin de lecteur de carte à puce pour récupérer une donnée chiffrée.

Selon des modes de réalisation non limitatifs, le procédé d'échange d'une donnée chiffrée peut comporter en outre une ou plusieurs caractéristiques supplémentaires parmi les suivantes :
- Le procédé comporte les étapes initiales de :
   - récupérer par le terminal le deuxième code de chiffrement image comprenant ladite clef privée;
   - décoder ledit deuxième code de chiffrement image dans ledit terminal ;
   - enregistrer ladite clef privée dans ledit terminal.
- Le terminal est :
   - un téléphone mobile ;
   - une tablette portable.
- Le premier code de chiffrement image et le deuxième code de chiffrement image sont composés :
   - d'un QR-Code® ; ou
   - d'un datamatrix ; ou
   - d'un code barre.
- Selon un premier mode de réalisation non limitatif, l'étape de récupération par le terminal du premier code de chiffrement image s'effectue au moyen d'une capture d'image dudit code de chiffrement image sur un écran de ladite machine par ledit terminal.
- Selon un deuxième mode de réalisation non limitatif, l'étape de récupération par le terminal du premier code de chiffrement image s'effectue par une réception dudit code de chiffrement image par ledit terminal, code de chiffrement image transmis par ladite machine.
- Le procédé comporte l'étape supplémentaire de déchiffrer le premier code de chiffrement image au moyen d'une clef secrète.
- Selon un premier mode de réalisation non limitatif, la donnée chiffrée est un mot de passe utilisateur permettant l'accès à ladite machine.
- Selon un deuxième mode de réalisation non limitatif, la donnée chiffrée est un identifiant de session et un mot de passe utilisateur permettant l'accès à un parc de machines.
- Selon un troisième mode de réalisation non limitatif, la donnée chiffrée est une chaîne de valeurs aléatoires à usage unique utilisée lors d'une authentification d'un terminal sur une machine.
- Le procédé comporte l'étape supplémentaire de générer à partir de ladite machine ledit premier code de chiffrement image comprenant ladite donnée chiffrée à partir d'une clef publique.
- Le procédé comporte l'étape supplémentaire de transmettre à partir de ladite machine ledit premier code de chiffrement image comprenant ladite donnée chiffrée audit terminal.
- Le procédé comporte l'étape supplémentaire d'afficher à partir de ladite machine ledit premier code de chiffrement image sur un écran de ladite machine.

Il est également proposé un terminal adapté pour échanger une donnée chiffrée avec une machine, ledit terminal comportant une unité processeur adaptée pour :
- récupérer un premier code de chiffrement image comprenant ladite donnée chiffrée à partir d'une clef publique, ledit premier code de chiffrement image ayant été généré par ladite machine ;
- décoder ledit premier code de chiffrement image pour obtenir ladite donnée chiffrée ;
- déchiffrer ladite donnée chiffrée au moyen d'une clef privée enregistrée dans ledit terminal, ladite clef privée ayant été obtenue à partir d'un deuxième code de chiffrement image généré par ladite machine.

Selon un mode de réalisation non limitatif, ladite unité processeur est en outre adaptée pour :
- récupérer le deuxième code de chiffrement image comprenant ladite clef privée;
- décoder ledit deuxième code de chiffrement image ;
- enregistrer ladite clef privée.

Sil est également proposé un système d'échange d'une donnée chiffrée entre un terminal et une machine, ledit système comportant :
- un terminal selon l'une des caractéristiques précédentes ; et
- une machine comprenant une unité processeur adaptée pour :
   - générer ledit premier code de chiffrement image comprenant ladite donnée chiffrée à partir d'une clef publique :
   - transmettre ledit premier code de chiffrement image comprenant ladite donnée chiffrée audit terminal et/ou d'afficher ledit premier code de chiffrement image sur un écran.

Il est également proposé un produit programme d'ordinateur comportant une ou plusieurs séquences d'instructions exécutables par une unité de traitement d'information, l'exécution desdites séquences d'instructions permettant une mise en œuvre du procédé d'échange d'une donnée chiffrée selon l'une quelconque des caractéristiques précédentes, lorsqu'il est chargé sur un ordinateur.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention.
- La Fig. 1 représente schématiquement un mode de réalisation non limitatif d'un procédé d'échange d'une donnée chiffrée selon l'invention;
- La Fig. 2 représente schématiquement un mode de réalisation non limitatif du procédé d'échange d'une donnée chiffrée selon la Fig. 1, ledit procédé comportant des étapes supplémentaires ;
- La Fig. 3a représente un premier diagramme de séquences comprenant les étapes du procédé de la Fig. 1 et de la Fig. 2 dans lequel une étape pour récupérer un code de chiffrement image se fait par capture d'image dudit code ;
- La Fig. 3b représente un deuxième diagramme de séquences comprenant les étapes du procédé de la Fig. 1 et de la Fig. 2 dans lequel une étape pour récupérer un code de chiffrement image se fait par réception dudit code ;
- La Fig. 4 représente schématiquement un mode de réalisation non limitatif d'un système d'échange dans lequel le procédé d'échange de la Fig. 1 à la Fig. 3b est mis en œuvre.

### DESCRIPTION DES FORMES DE REALISATION PREFEREES DE L'INVENTION

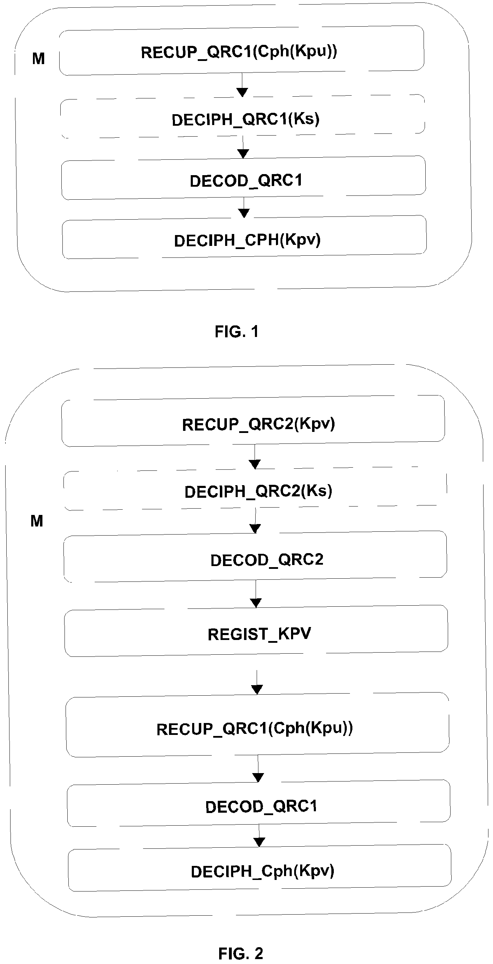

Le procédé M d'échange d'une donnée chiffrée entre un terminal UE et une machine DEV, est décrit dans un mode de réalisation non limitatif à la Fig. 1.

Le procédé comprend les étapes de :
- récupérer par le terminal UE un premier code de chiffrement image QRC1 comprenant ladite donnée chiffrée Cph à partir d'une clef publique Kpu, ledit premier code de chiffrement ayant été généré par ladite machine DEV (étape illustrée RECUP_QRC1 (Cph(Kpu))) ;
- décoder ledit premier code de chiffrement image QRC1 dans ledit terminal UE pour obtenir ladite donnée chiffrée Cph (étape illustrée DECOD_QRC1 (Cph(Kpu))) ;
- déchiffrer ladite donnée chiffrée Cph au moyen d'une clef privée Kpv enregistrée dans ledit terminal UE, ladite clef privée Kpv ayant été obtenue à partir d'un deuxième code de chiffrement image QRC2 généré par ladite machine DEV (étape illustrée DECIPH_CPH(Kpv)).

Dans un mode de réalisation non limitatif illustré à la Fig. 2, le procédé comporte en outre les étapes initiales de :
- récupérer par le terminal UE le deuxième code de chiffrement image QRC2 comprenant ladite clef privée Kpv (étape illustrée RECUP_QRC2(Kpv)) ;
- décoder ledit deuxième code de chiffrement image QRC2 dans ledit terminal UE (étape illustrée DECOD_QRC2(Kpv)) ;
- enregistrer ladite clef privée Kpv dans ledit terminal UE (étape illustrée REGIST_KPV) ;

Le procédé est mis en œuvre dans un système SYS comprenant un terminal UE qui est adapté pour coopérer avec une machine DEV.

Dans des modes de réalisation non limitatifs, le terminal UE est un téléphone mobile (appelé également téléphone portable) ou une tablette portable et la machine DEV est un poste de travail, un serveur, une station de travail, un téléphone mobile ou une tablette portable.

Dans la suite de la description, on prendra comme exemple non limitatif un téléphone portable pour le terminal UE et un poste de travail pour la machine DEV.

Lorsque le propriétaire d'un téléphone portable UE veut par exemple avoir accès de manière sécuritaire à une donnée dans le poste de travail DEV, le procédé d'échange de donnée chiffrée est mis en œuvre de la manière suivante en se référant aux Fig. 1 à 3b.

**Dans une première étape 1)** illustrée RECUP_QRC1 (Cph(Kpu)), le téléphone portable UE récupère un premier code de chiffrement image QRC1 comprenant la donnée chiffrée Cph à partir d'une clef publique Kpu, ledit premier code de chiffrement image QRC1 ayant été généré par ladite machine DEV.

Dans des modes de réalisation non limitatifs, le premier code de chiffrement image QRC1 est composé :
- d'un QR-Code® ; ou
- d'un datamatrix ; ou
- d'un code barre.
Ces codes images permettent d'intégrer une donnée chiffrée Cph.

Dans un exemple non limitatif, le premier code de chiffrement image QRC1 comprend les champs suivants :
- la version du format de la donnée échangée. Ce champ permet au terminal UE de savoir quels sont les champs contenus dans le premier code de chiffrement image QRC1 et donc de le décoder correctement ;
- le nom de la machine DEV qui a généré le premier code de chiffrement image QRC1 ;
- le cas d'usage (décrit plus loin) ;
- la donnée chiffrée Cph par une clef publique Kpu.

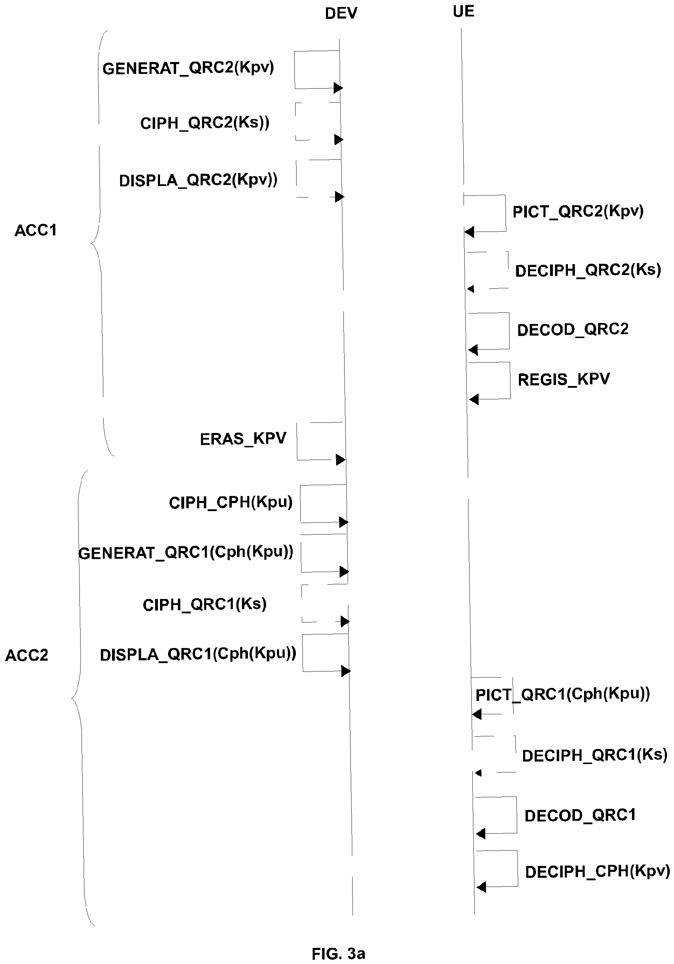

Dans un premier mode de réalisation non limitatif, cette étape de récupération s'effectue au moyen d'une capture d'image dudit premier code de chiffrement image QRC1 sur un écran SCRd de ladite machine DEV par ledit téléphone portable UE (illustrée PICT_QRC1 (Cph(Kpu))).
Ainsi, après avoir généré ledit premier code de chiffrement image QRC1 (étape illustrée GENERAT _QRC1 (Cph(Kpu) illustrée à la Fig. 3a), ladite machine DEV l'affiche sur son écran SCRd et le téléphone portable UE peut ainsi photographier ledit code QRC1 au moyen d'une caméra CAM par exemple.

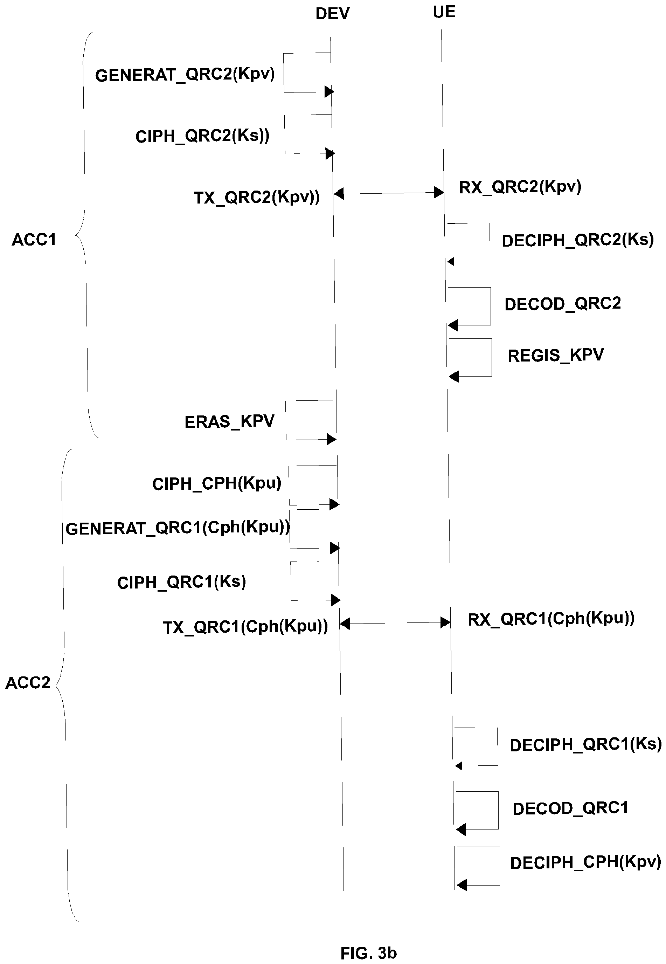

Dans un deuxième mode de réalisation non limitatif, cette étape de récupération s'effectue par une réception dudit premier code de chiffrement image QRC1 par ledit terminal UE (étape illustrée RX_QRC1 (Cph(Kpu) illustrée à la Fig. 3b), code de chiffrement image QRC1 transmis par ladite machine DEV (étape illustrée TX_QRC1 (Cph(Kpu)).
Ainsi, après avoir généré ledit premier code de chiffrement image QRC1, la machine DEV l'envoie au téléphone mobile via un protocole de communication existant entre ladite machine DEV et ledit téléphone portable UE. Dans des exemples non limitatifs, le protocole Bluetooth™, un protocole 3GPP ou encore l'email peuvent être utilisés pour envoyer ledit code QRC1.

On notera que selon un mode de réalisation non limitatif, le premier code de chiffrement image QRC1 peut être chiffré au moyen d'une clef secrète Ks (étape illustrée en pointillés CIPH_QRC1 (Ks) sur la Fig. 3a ou sur la Fig. 3b) afin de sécuriser la récupération dudit code QRC1 par le terminal UE. Dans ce cas, le procédé comporte l'étape supplémentaire de déchiffrer le premier code de chiffrement image QRC1 au moyen de ladite clef secrète Ks (étape illustrée en pointillés DECIPH_QRC1 (Ks) sur la Fig. 3a ou sur la Fig. 3b). On notera que cette clef secrète est une clef dite symétrique qui se trouve à la fois dans la machine DEV et à la fois dans le terminal UE.

**Dans une deuxième étape 2)** illustrée DECOD_QRC1, après avoir récupéré ledit premier code de chiffrement image QRC1 (et le cas échéant après l'avoir déchiffré avec la clef secrète Ks), le téléphone portable UE décode ledit premier code de chiffrement image QRC1 pour obtenir ladite donnée chiffrée Cph.

Ainsi, dans l'exemple non limitatif du QR-Code®, le téléphone portable va lire le contenu des champs du QR-Code® et ainsi obtenir la donnée chiffrée Cph. Un tel décodage d'un premier code de chiffrement image QRC1 étant connu de l'homme du métier (que ce soit pour un QR-Code®, un datamatrix ou encore pour un code barre), il n'est pas décrit ici.

**Dans une troisième étape 3**) illustrée DECIPH_CPH(Kpv), le téléphone portable UE déchiffre ladite donnée chiffrée Cph au moyen d'une clef privée Kpv enregistrée dans ledit terminal UE, ladite clef privée Kpv ayant été obtenue à partir d'un deuxième code de chiffrement image QRC2 généré par ladite machine DEV.

On notera que c'est le poste de travail DEV qui a chiffré la donnée chiffrée au moyen de la clef privée Kpv (étape illustrée CIPH_CPH(Kpv) sur les Fig. 3a et 3b).

On notera que le téléphone portable UE a obtenu la clef privée Kpv de la même manière que la donné chiffrée Cph, à savoir au moyen d'un code de chiffrement image, ici un deuxième code QRC2 qui a été récupéré à partir du poste de travail DEV de la même manière que le premier code de chiffrement image QRC1. Bien entendu, la récupération du deuxième code image QRC2 s'est faite préalablement à la récupération du premier code de chiffrement image QRC1 dans une phase d'initialisation.
Ainsi, pour obtenir la clef privée Kpv, les étapes initiales suivantes ont été exécutées tel qu'illustré à la Fig. 2.
- le téléphone portable UE récupère le deuxième code de chiffrement image QRC2 comprenant ladite clef privée Kpv (étape illustrée RECUP_QRC2(Kpv)). Les mêmes modes de récupération que pour le premier code QRC1 peuvent être utilisés (par capture d'image ou par réception).
- le téléphone portable UE décode ledit deuxième code de chiffrement image QRC2 (étape illustrée DECOD_QRC2). On notera que ce deuxième code de chiffrement image QRC2 peut dans un mode de réalisation non limitatif avoir été chiffré au préalable par la machine DEV (étape illustrée CIPH_QRC2(Ks)) au moyen d'une clef secrète Ks.
- le téléphone portable UE enregistre ladite clef privée Kpv (étape illustrée REGIST_KPV).
Ainsi, le poste de travail DEV qui comporte la clef privée Kpv et qui a généré le deuxième code de chiffrement image QRC2 comprenant ladite clef privée Kpv peut l'effacer de sa mémoire lorsque cette dernière a été récupérée par le téléphone portable UE (étape illustrée ERAS_KPV sur la Fig. 3a et sur la Fig. 3b). Ainsi, il n'y a plus de risque qu'une tierce personne récupère frauduleusement cette clef privée Kpv. En pratique, lorsque le poste de travail DEV sera éteint, la clef privée Kpv s'effacera de la mémoire volatile.

On notera que pour récupérer le deuxième code de chiffrement image QRC2, l'utilisateur du téléphone portable a lancé un programme sur la machine DEV pour générer la clef privée Kpv, le deuxième code de chiffrement QRC2 et afficher ledit code sur l'écran de la machine DEV.

La Fig. 3a illustre le séquencement de l'ensemble des étapes décrites ci-dessus entre le poste de travail DEV et le téléphone portable UE lorsque par exemple la récupération des codes de chiffrement QRC1 et QRC2 se fait par affichage/capture d'image desdits codes. Comme on peut le voir sur la figure, lors d'une première phase de génération de clef privée Kpv, le poste de travail génère QRC2 qui intègre Kpv (après avoir généré Kpv), surchiffre QRC2 avec Ks et affiche QRC2 sur son écran de sorte que lors d'une deuxième phase d'acquisition de la clef privée Kpv, le téléphone portable UE récupère QRC2 par capture d'image, déchiffre QRC2 avec Ks, décode QRC2 pour obtenir Kpv et stocke Kpv en mémoire. Puis le poste de travail DEV efface Kpv de sa mémoire.
Dans une troisième phase de chiffrement d'une donnée, le poste de travail chiffre une donnée avec Kpu pour obtenir Cph, génère QRC1 qui intègre Cph, surchiffre QRC1 avec Ks, et affiche QRC1 sur son écran de sorte que lors d'une quatrième phase d'acquisition de Cph, le téléphone portable UE récupère QRC1 par capture d'image, déchiffre QRC1 avec Ks, décode QRC1 pour obtenir Cph et déchiffre Cph avec Kpv stockée en mémoire.

La Fig. 3b illustre le séquencement de l'ensemble des étapes décrites ci-dessus entre le poste de travail DEV et le téléphone portable UE lorsque par exemple la récupération des codes de chiffrement QRC1 et QRC2 se fait par transmission/réception desdits codes.

Ainsi, comme illustré sur ces deux figures, lorsque l'utilisateur du téléphone portable UE accède pour la première fois au poste de travail (illustré ACC1), il récupère la clef privée Kpv. Puis, à un autre instant lorsqu'il accède au poste de travail DEV (illustré ACC2), il récupère la donnée chiffrée Cph.

Le procédé d'échange d'une donnée chiffrée M décrit ci-dessus présente de nombreux cas d'utilisation dont quelques-uns sont décrits ci-après.

### • Premier cas d'usage

Dans ce cas d'usage, dans un premier mode de réalisation, la donnée chiffrée Cph est un mot de passe utilisateur MDP permettant l'accès à ladite machine DEV.

Après avoir effectué la phase d'initialisation avec une machine DEV pour récupérer la clef privée Kpv via un deuxième code de chiffrement d'image QRC2, le propriétaire du terminal UE ouvre une session utilisateur sur la machine DEV en entrant son identifiant utilisateur LOGIN et son mot de passe MDP. Ce dernier est chiffré avec une clef publique Kpu par la machine DEV et est enregistré sur la machine DEV en association avec l'identifiant utilisateur LOGIN. Dans un mode de réalisation non limitatif, le mot de passe chiffré peut être chiffré de nouveau avec une clef secrète Ks. On notera que dans le cas où un unique utilisateur est autorisé à accéder à la machine, l'utilisateur n'a pas besoin d'entrer son identifiant.

Lorsque l'utilisateur du terminal UE veut par la suite de nouveau se connecter sur la machine DEV, il entre son identifiant utilisateur LOGIN sur la machine. A ce moment, la machine DEV recherche en mémoire le mot de passe MDP correspondant à cet identifiant utilisateur et encode ledit mot de passe dans un premier code de chiffrement image QRC1, puis affiche ledit code sur son écran SCRd. Le terminal UE récupère le premier code de chiffrement image QRC1 comprenant ledit mot de passe chiffré MDP comme décrit précédemment et il le décode et déchiffre le mot de passe comme décrit précédemment. Ainsi, l'utilisateur n'a plus eu besoin de retenir son mot de passe après l'avoir entré une première fois dans la machine.

A ce moment trois variantes de réalisation peuvent être mises en œuvre.
- le mot de passe déchiffré est affiché sur l'écran du terminal UE, l'utilisateur du terminal UE lit le mot de passe sur son écran et entre alors le mot de passe sur la machine DEV ce qui lui permet d'accéder à ladite machine.
- une valeur quelconque associée au mot de passe est affichée sur l'écran du terminal UE, l'utilisateur du terminal lit cette valeur sur son écran et entre alors cette valeur quelconque sur la machine DEV. A ce moment, la machine vérifie l'association valeur quelconque-mot de passe et si l'association est validée, la machine autorise l'accès à l'utilisateur. Dans un autre exemple, la machine peut se connecter à un serveur qui vérifie ladite association.
   Cette variante permet d'attribuer un mot de passe temporaire à un utilisateur.
- le mot de passe déchiffré est affiché sur l'écran du terminal UE, l'utilisateur du terminal UE lit le mot de passe sur son écran et entre alors le mot de passe sur la machine DEV. Dans le cas où le mot de passe est correct, la machine DEV demande à l'utilisateur d'entrer un nouveau mot de passe. A ce moment, l'accès à la machine DEV est autorisé et la machine fait appel à un serveur pour modifier la valeur du mot de passe associée à l'identifiant utilisateur avec la nouvelle valeur de mot de passe entrée par l'utilisateur. Cette variante permet d'attribuer un mot de passe temporaire à un utilisateur.

Ainsi, ce premier cas d'usage est une solution de remplacement pour un système dit d'accès de secours appelé SSPR (« Self Service Password Reset ») car il évite d'utiliser un tel système. Un tel système est basé sur une série de questions réponses lorsqu'un utilisateur a oublié son mot de passe. Un tel système présente l'inconvénient d'être soit trop faible au niveau sécurité en raison des questions qui peuvent être trop simples, soit d'être trop contraignante pour l'utilisateur en raison des questions qui peuvent être trop compliquées. Avec ce premier cas d'usage, on se passe ainsi des questions-réponses.

Ainsi, ce premier cas d'usage est une solution de secours pour les systèmes utilisant des systèmes d'identification tels qu'une carte biométrique ou une carte à puce dans le cas où ces systèmes sont défaillants (défaillance de la carte, du lecteur carte, empreinte digitales enregistrées abîmées) ou dans le cas où l'utilisateur de tels systèmes ne se souvient pas de son mot de passe car il l'a oublié ou ce dernier a changé. Cela évite également d'appeler un administrateur système.

### • Deuxième cas d'usage

Dans ce cas d'usage, dans un deuxième mode de réalisation, la donnée chiffrée Cph est un identifiant de session LOGIN appelé en anglais login et un mot de passe utilisateur MDP permettant l'accès à un parc de machines DEV.

Le LOGIN-mot de passe correspond à un compte administrateur local qui permet d'accéder à l'ensemble des machines du parc de machines.

Lors de la phase d'initialisation, chaque utilisateur du département système information par exemple, possède un terminal UE qui a récupéré le deuxième code de chiffrement image QRC2 avec la clef privée Kpv.

Par la suite, lorsqu'un tel utilisateur demande d'accéder à une machine DEV, du parc de machines, il fait sa demande via une icône correspondante sur l'écran de la machine par exemple. A ce moment, la machine DEV affiche sur son écran ou envoie le premier code de chiffrement image QRC1 comprenant le LOGIN-mot de passe chiffré.

Le terminal UE récupère ce code QRC1 et si l'utilisateur du terminal UE est autorisé à accéder à cette machine, cela veut dire qu'il a initialisé son terminal selon la phase d'initialisation décrit ci-dessus et donc que son terminal comporte la bonne clef privée Kpv pour décoder le login-mot de passe. Par la suite, le terminal UE décode le QRC1 et déchiffre le LOGIN-mot de passe et l'affiche sur son écran pour que l'utilisateur puisse le lire. L'utilisateur va alors pouvoir entrer le LOGIN-mot de passe sur la machine DEV et accéder en tant qu'administrateur local.

Ainsi, ce deuxième cas d'usage permet d'avoir une solution de remplacement pour un système comportant un compte administrateur local (login-mot de passe) sur l'ensemble des machines du parc car il évite d'avoir un compte administrateur local (login-mot de passe) sur l'ensemble des machines du parc. Dans ce type de système, le login-mot de passe du compte administrateur local est en général dérivé du nom de la machine ce qui présente une faille sécuritaire importante.

### • Troisième cas d'usage

Dans ce cas d'usage, dans un troisième mode de réalisation, la donnée chiffrée Cph est une chaîne de valeurs aléatoires C_RND à usage unique utilisée lors d'une authentification d'un terminal UE sur une machine DEV.

Dans la phase d'initialisation, le terminal UE a récupéré la clef privée au moyen du deuxième code de chiffrement image QRC2 comme décrit précédemment.

Lorsque l'utilisateur demande par la suite un accès à la machine DEV, il entre son identifiant utilisateur et clique par exemple sur une icône qui lance une requête à la machine DEV.

A ce moment, la machine DEV récupère la clef publique dans un annuaire utilisateurs, la clef publique étant associée à un utilisateur donné. L'annuaire comporte ainsi une pluralité de couple clef publique-utilisateur. L'annuaire permet un stockage centralisé de l'information. Dans un autre exemple, la clef publique et l'identifiant du ou des utilisateurs associés peuvent être stockés dans une base de données.

La machine chiffre alors une chaîne de valeurs aléatoires C_RND à usage unique avec la clef publique et la code dans le premier code de chiffrement image QRC1.

Le terminal UE récupère ce premier code de chiffrement image QRC1, le décode pour obtenir la chaîne de valeurs aléatoires C_RND et affiche la chaîne à l'écran comme décrit précédemment. L'utilisateur lit sur l'écran la chaîne de valeurs aléatoires C_RND et entre ladite chaîne sur la machine à laquelle il veut se connecter. Si la valeur tapée par l'utilisateur et la valeur enregistrée dans la machine sont les mêmes, l'utilisateur a le droit d'accéder à la machine.

A la prochaine connexion sur la machine, une autre chaîne de valeurs aléatoires sera générée par la machine DEV.

Ainsi, ce cas d'usage permet de remplacer un système appelé OTP (« One Time Password ») qui est basé sur l'utilisation d'un mot de passe qui est valide une unique fois pour une session utilisateur ou une transaction. De manière connue de l'homme du métier, ce système utilise un algorithme mathématique où le nouveau mot de passe est basé sur un défi (par exemple, un nombre aléatoire choisi par un serveur d'authentification ou de détails de la transaction). Le défi est implémenté dans un serveur d'authentification et également dans une carte appelée « token » en anglais. Ainsi, l'utilisateur du « token » peut lire sur l'écran du « token » le mot de passe et entrer la valeur du mot de passe sur la machine à laquelle il veut accéder, machine qui est reliée au serveur d'authentification. Un inconvénient de ce système est que si quelqu'un entre en possession de ce token, il pourra effectuer la transaction de façon frauduleuse par exemple. Par ailleurs, ce système nécessite du matériel spécifique.

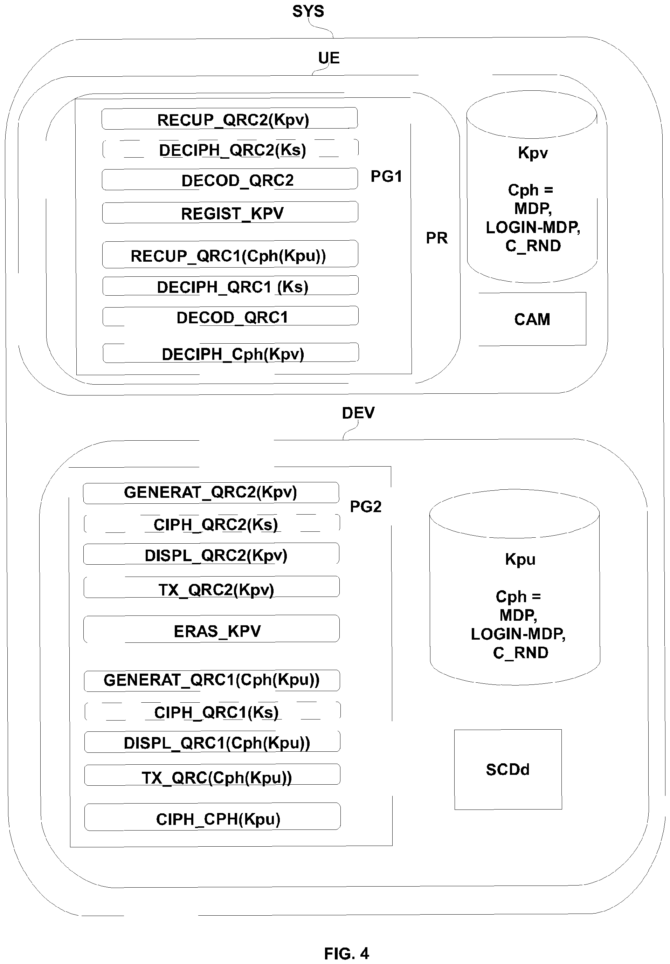

Ainsi, tel qu'illustré à la Fig. 4, le procédé d'échange d'une donnée chiffrée est mis en œuvre dans un système SYS d'échange de donnée chiffrée entre un terminal UE et une machine DEV, ledit système comprenant :
- ledit terminal UE comprenant une unité processeur PR adaptée pour :
   - récupérer un premier code de chiffrement image QRC1 comprenant ladite donnée chiffrée Cph à partir d'une clef publique Kpu, ledit premier code de chiffrement image ayant été généré par ladite machine DEV ;
   - décoder ledit premier code de chiffrement image QRC1 pour obtenir ladite donnée chiffrée Cph ;
   - déchiffrer ladite donnée chiffrée Cph au moyen d'une clef privée Kpv enregistrée dans ledit terminal UE, ladite clef privée Kpv ayant été obtenue à partir d'un deuxième code de chiffrement image QRC2 généré par ladite machine DEV.
- ladite machine DEV comprenant une unité processeur PR' adaptée pour :
- générer ledit premier code de chiffrement image QRC1 comprenant ladite donnée chiffrée Cph à partir d'une clef publique Kpu (illustrée GENERAT_QRC1 (Cph(Kpu)) ;
- transmettre ledit premier code de chiffrement image QRC1 comprenant ladite donnée chiffrée Cph audit terminal UE (illustrée TX_QRC1 (Cph(Kpu)) ou afficher ledit premier code de chiffrement image QRC1 sur un écran (illustrée DISPL_QRC1 (Cph(Kpu)).

On notera qu'une unité processeur PR, PR' comporte un ou plusieurs processeurs.

Dans un mode de réalisation non limitatif, l'unité processeur PR du terminal UE est en outre adaptée pour :
- récupérer le deuxième code de chiffrement image QRC2 comprenant ladite clef privée Kpv ;
- décoder ledit deuxième code de chiffrement image QRC2 ;
- enregistrer ladite clef privée Kpv.

Dans un mode de réalisation non limitatif, l'unité processeur PR' de ladite machine DEV est en outre adaptée pour :
- générer ledit deuxième code de chiffrement image QRC2 comprenant ladite clef privée Kpv (illustrée GENERAT_QRC2(Kpv)) ;
- transmettre ledit deuxième code de chiffrement image QRC2 comprenant ladite clef privée Kpv audit terminal UE (illustrée TX_QRC2(Kpv)) et/ou afficher ledit deuxième code de chiffrement image QRC2 sur un écran (illustrée DISPL_QRC2(Kpv).

Bien entendu, le procédé décrit précédemment n'est nullement limité aux cas d'usage décrits. Ainsi, dans un autre cas d'usage non limitatif, la donnée chiffrée Cph comprend un code secret d'un coffre fort par exemple. Dans ce cas, le premier code de chiffrement QRC1 comprend ce code secret chiffré. Le propriétaire du coffre fort peut ainsi imprimer sur papier ce premier code de chiffrement QRC1 et l'afficher sur son coffre fort. Lorsqu'il veut accéder à son coffre fort et s'il ne se souvient pas de son code secret, il suffit qu'il photographie le QRC1 avec son terminal UE, ce dernier décode le QRC1, récupère le code secret chiffré, le déchiffre et l'affiche sur l'écran du terminal UE pour le propriétaire. Ainsi, pour avoir accès au coffre fort, une tierce personne doit s'introduire dans la maison du propriétaire pour voler le papier sur lequel est imprimé le premier code de chiffrement QRC1, mais aussi le terminal UE du propriétaire. On notera que la clef privée est récupérée par le terminal UE via un deuxième code de chiffrement QRC2, ce deuxième code ayant été imprimé par le fabricant du coffre-fort par exemple et donné à l'utilisateur. Dans un autre exemple, un programme spécifique fourni à l'utilisateur par le fabricant peut être utilisé pour générer la clef privée, générer et afficher le deuxième code QRC2, ainsi que générer la clef publique et générer et afficher le premier code QRC1.

On notera que la mise en œuvre du procédé d'échange d'une donnée chiffrée exposé ci-dessus peut être effectuée au moyen d'un dispositif micro programmé « software », d'une logique câblée et/ou de composants électroniques « hardware ».

Ainsi, le terminal UE peut comporter un ou plusieurs produits programmes d'ordinateur comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en œuvre du procédé décrit. Il en est de même pour la machine DEV.

Un tel programme d'ordinateur peut être inscrit en mémoire non volatile inscriptible de type ROM ou en mémoire non volatile réinscriptible de type EEPROM ou FLASH. Ledit programme d'ordinateur peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 4, un premier programme d'ordinateur PG1 est inscrit dans une mémoire du terminal UE.

Dans l'exemple non limitatif de la Fig. 3, un deuxième programme d'ordinateur PG2 est inscrit dans une mémoire de la machine DEV.

Bien entendu la description de l'invention n'est pas limitée à l'application, aux modes de réalisation et aux exemples décrits ci-dessus.

Ainsi, l'invention décrite présente notamment les avantages suivants :
- elle s'applique à tous les terminaux qui sont largement déployés sur le marché et qui possèdent notamment un capteur d'image pour récupérer un code de chiffrement image ;
- elle permet d'échanger une donnée privée sans nécessiter de lien sécurisé entre le terminal UE et la machine DEV dans le cas d'une capture d'image d'un code de chiffrement QRC. Elle permet ainsi des accès au web ou encore une prise de main à distance d'une machine, ce qui ne peut se faire au moyen d'une carte à puce ;
- elle permet d'utiliser un terminal qui est indépendant de la machine dans le cas d'une capture d'image d'un code de chiffrement QRC. Dans ce cas, on ne se soucie pas de la comptabilité entre le terminal et la machine au niveau protocole de communication, version, ni de mettre en place une méthode de vérification de bonne réception de données par le terminal, comme dans le cas d'une carte à puce par exemple ;
- l'utilisateur n' a plus besoin de se souvenir de son mot de passe pour accéder à une machine. Ainsi, il n'y a plus de risque non plus qu'il laisse son mot de passe dans un endroit accessible à une tierce personne ;
- de manière générale, l'utilisateur n'a plus besoin de se souvenir de ses nombreux mots de passe qu'il utilise dans la vie courante ou dans la vie professionnelle ;
- elle est simple à mettre en œuvre.

## Revendications

1. Procédé (M) d'échange d'une donnée chiffrée (Cph) entre un terminal (UE) et une machine (DEV), le procédé comportant les étapes de :
- récupérer par le terminal (UE) un premier code de chiffrement image (QRC1) comprenant ladite donnée chiffrée (Cph) à partir d'une clef publique (Kpu), ledit premier code de chiffrement image ayant été généré par ladite machine (DEV) ;
- décoder ledit premier code de chiffrement image (QRC1) dans ledit terminal (UE) pour obtenir ladite donnée chiffrée (Cph) ;
- déchiffrer ladite donnée chiffrée (Cph) au moyen d'une clef privée (Kpv) enregistrée dans ledit terminal (UE), ladite clef privée (Kpv) ayant été obtenue à partir d'un deuxième code de chiffrement image (QRC2) généré par ladite machine (DEV)
et le procédé comportant les étapes initiales de :
- récupérer par le terminal (UE) le deuxième code de chiffrement image (QRC2) comprenant ladite clef privée (Kpv);
- décoder ledit deuxième code de chiffrement image (QRC2) dans ledit terminal (UE) ;
- enregistrer ladite clef privée (Kpv) dans ledit terminal (UE).

2. Procédé (M) selon la revendication 1, selon lequel le terminal (UE) est :
- un téléphone mobile ;
- une tablette portable.

3. Procédé (M) selon l'une quelconque des revendications précédentes, selon lequel le premier code de chiffrement image (QRC1) et le deuxième code de chiffrement image (QRC2) sont composés :
- d'un QR-Code® ; ou
- d'un datamatrix ; ou
- d'un code barre.

4. Procédé (M) selon l'une quelconque des revendications précédentes, selon lequel l'étape de récupération par le terminal (UE) du premier code de chiffrement image (QRC1) s'effectue au moyen d'une capture d'image dudit code de chiffrement image (QRC1) sur un écran de ladite machine (DEV) par ledit terminal (UE).

5. Procédé (M) selon l'une quelconque des revendications précédentes 1 à 3, selon lequel l'étape de récupération par le terminal (UE) du premier code de chiffrement image (QRC1) s'effectue par une réception dudit code de chiffrement image (QRC1) par ledit terminal (UE), code de chiffrement image (QRC1) transmis par ladite machine (DEV).

6. Procédé (M) selon l'une quelconque des revendications précédentes, selon lequel le procédé comporte l'étape supplémentaire de déchiffrer le premier code de chiffrement image (QRC1) au moyen d'une clef secrète (Ks).

7. Procédé (M) selon l'une quelconque des revendications précédentes, selon lequel la donnée chiffrée est un mot de passe utilisateur (MDP) permettant l'accès à ladite machine (DEV).

8. Procédé (M) selon l'une quelconque des revendications précédentes 1 à 6, selon lequel la donnée chiffrée est un identifiant de session (LOGIN) et un mot de passe utilisateur (MDP) permettant l'accès à un parc de machines (DEV).

9. Procédé (M) selon l'une quelconque des revendications précédentes 1 à 6, selon lequel la donnée chiffrée est une chaîne de valeurs aléatoires (C_RND) à usage unique utilisée lors d'une authentification d'un terminal (UE) sur une machine (DEV).

10. Procédé (M) selon l'une quelconque des revendications précédentes, selon lequel le procédé comporte l'étape supplémentaire de générer à partir de ladite machine (DEV) ledit premier code de chiffrement image (QRC1) comprenant ladite donnée chiffrée (Cph) à partir d'une clef publique (Kpu).

11. Procédé (M) selon l'une quelconque des revendications précédentes, selon lequel le procédé comporte l'étape supplémentaire de transmettre à partir de ladite machine (DEV) ledit premier code de chiffrement image (QRC1) comprenant ladite donnée chiffrée (Cph) audit terminal (UE).

12. Procédé (M) selon l'une quelconque des revendications précédentes, selon lequel le procédé comporte l'étape supplémentaire d'afficher à partir de ladite machine (DEV) ledit premier code de chiffrement image (QRC1) sur un écran de ladite machine (DEV).

13. Terminal (UE) adapté pour échanger une donnée chiffrée avec une machine (DEV), ledit terminal comportant une unité processeur (PR) adaptée pour :
- récupérer un premier code de chiffrement image (QRC1) comprenant ladite donnée chiffrée (Cph) à partir d'une clef publique (Kpu), ledit premier code de chiffrement image ayant été généré par ladite machine (DEV) ;
- décoder ledit premier code de chiffrement image (QRC1) pour obtenir ladite donnée chiffrée (Cph) ;
- déchiffrer ladite donnée chiffrée (Cph) au moyen d'une clef privée (Kpv) enregistrée dans ledit terminal (UE), ladite clef privée (Kpv) ayant été obtenue à partir d'un deuxième code de chiffrement image (QRC2) généré par ladite machine (DEV), ladite unité processeur (PR) étant en outre adaptée pour :
- récupérer le deuxième code de chiffrement image (QRC2) comprenant ladite clef privée (Kpv);
- décoder ledit deuxième code de chiffrement image (QRC2) ;
- enregistrer ladite clef privée (Kpv).

14. Système (SYS) d'échange d'une donnée chiffrée entre un terminal (UE) et une machine (DEV), ledit système comportant :
- un terminal selon la revendication 13; et
- une machine (DEV) comprenant une unité processeur (PR') adaptée pour :
- générer ledit premier code de chiffrement image (QRC1) comprenant ladite donnée chiffrée (Cph) à partir d'une clef publique (Kpu) :
- transmettre ledit premier code de chiffrement image (QRC1) comprenant ladite donnée chiffrée (Cph) audit terminal (UE) et/ou d'afficher ledit premier code de chiffrement image (QRC1) sur un écran.

15. Produit programme d'ordinateur (PG) comportant une ou plusieurs séquences d'instructions exécutables par une unité de traitement d'information, l'exécution desdites séquences d'instructions permettant une mise en œuvre du procédé d'échange d'une donnée chiffrée selon l'une quelconque des revendications précédentes 1 à 12, lorsqu'il est chargé sur un ordinateur.

## Patentansprüche

1. Austauschverfahren (M) eines bezifferten Datenelements (Cph) zwischen einem Terminal (UE) und einer Maschine (DEV), wobei das Verfahren die Schritte umfasst:
- Rückgewinnen eines ersten Bildchiffrierungscodes (QRC1) durch das Terminal (UE), umfassend das genannte bezifferte Datenelement (Cph), ausgehend von einem öffentlichen Schlüssel (Kpu), wobei der genannte Bildchiffrierungscode durch die genannte Maschine (DEV) erzeugt wurde;
- Decodieren des genannten ersten Bildchiffrierungscodes (QRC1) in dem genannten Terminal (UE) zum Erhalten des genannten Datenelements (Cph);
- Dechiffrieren des genannten bezifferten Datenelements (Cph) mittels eines privaten Schlüssels (Kpv), der in dem genannten Terminal (UE) gespeichert ist, wobei der genannte private Schlüssel (Kpv) ausgehend von einem zweiten Bildchiffrierungscode (QRC2) erhalten wird, der von der genannten Maschine (DEV) erzeugt wird,
und wobei das Verfahren die anfänglichen Schritte umfasst:
- Rückgewinnen des zweiten Bildchiffrierungscodes (QRC2) durch das Terminal (UE), umfassend den genannten privaten Schlüssel (Kpv);
- Decodieren des genannten zweiten Bildchiffrierungscodes (QRC2) in dem genannten Terminal (UE);
- Registrieren des genannten privaten Schlüssels (Kpv) in dem genannten Terminal (UE).

2. Verfahren (M) gemäß Anspruch 1, gemäß dem das Terminal (UE) ist:
- ein mobiles Telefon;
- ein tragbares Tablet.

3. Verfahren (M) gemäß irgendeinem der voranstehenden Ansprüche, gemäß dem der erste Bildchiffrierungscode (QRC1) und der zweite Bildchiffrierungscode (QRC2) sich zusammensetzen aus:
- einem QR-Code®; oder
- einer Datenmatrix; oder
- einem Strichcode.

4. Verfahren (M) gemäß irgendeinem der voranstehenden Ansprüche, gemäß dem der Rückgewinnungsschritt durch das Terminal (UE) des ersten Bildchiffrierungscodes (QRC1) mittels einer Bildschirmkopie des genannten Bildchiffrierungscodes (QRC1) auf einem Bildschirm der genannten Maschine (DEV) durch das genannte Terminal (UE) erfolgt.

5. Verfahren (M) gemäß irgendeinem der voranstehenden Ansprüche 1 bis 3, gemäß dem der Rückgewinnungsschritt des ersten Bildchiffrierungscodes (QRC1) durch das Terminal (UE) durch einen Empfang des genannten Bildchiffrierungscode (QRC1) durch das genannte Terminal (UE) erfolgt, wobei der Bildchiffrierungscode (QRC1) durch die genannte Maschine (DEV) übertragen wird.

6. Verfahren (M) gemäß irgendeinem der voranstehenden Ansprüche, gemäß dem das Verfahren den zusätzlichen Schritt des Dechiffrierens des ersten Bildchiffrierungscodes (QRC1) mittels eines geheimen Schlüssels (Ks) umfasst.

7. Verfahren (M) gemäß irgendeinem der voranstehenden Ansprüche, gemäß dem das bezifferte Datenelement ein Nutzerpasswort (MDP) ist, das den Zugang zu der genannten Maschine (DEV) erlaubt.

8. Verfahren (M) gemäß irgendeinem der voranstehenden Ansprüche 1 bis 6, gemäß dem das bezifferte Datenelement eine Sitzungskennung (LOGIN) und ein Nutzerpasswort (MDP) ist, das den Zugriff auf einen Maschinenpark (DEV) erlaubt.

9. Verfahren (M) gemäß irgendeinem der voranstehenden Ansprüche 1 bis 6, gemäß dem das bezifferte Datenelement eine Kette von zufälligen Werten (C_RND) zum einmaligen Gebrauch ist, die bei einer Authentifizierung eines Terminals (UE) auf einer Maschine (DEV) verwendet wird.

10. Verfahren (M) gemäß irgendeinem der voranstehenden Ansprüche, gemäß dem das Verfahren den zusätzlichen Schritt des Erzeugens des genannten Bildchiffrierungscode (QRC1) ausgehend von der genannten Maschine (DEV) umfasst, umfassend das genannte bezifferte Datenelement (Cph) ausgehend von einem öffentlichen Schlüssel (Kpu).

11. Verfahren (M) gemäß irgendeinem der voranstehenden Ansprüche, gemäß dem das Verfahren den zusätzlichen Schritt des Übertragens des genannten ersten Bildchiffrierungscodes (QRC1), umfassend das genannte Datenelement (Cph), ausgehend von der genannten Maschine (DEV) auf das genannte Terminal (UE) umfasst,.

12. Verfahren (M) gemäß irgendeinem der voranstehenden Ansprüche, gemäß dem das Verfahren den zusätzlichen Schritt des Anzeigens des genannten ersten Bildchiffrierungscodes (QRC1) auf einem Bildschirm der genannten Maschine (DEV) ausgehend von der genannten Maschine (DEV) umfasst.

13. Terminal (UE), das zum Austauschen eines bezifferten Datenelements mit einer Maschine (DEV) geeignet ist, wobei das genannte Terminal eine Prozessoreinheit (PR) umfasst, die geeignet ist zum:
- Wiedergewinnen eines ersten Bildchiffrierungscodes (QRC1), umfassend das bezifferte Datenelement (Cph) ausgehend von einem öffentlichen Schlüssel (Kpu), wobei der genannte erste Bildchiffrierungscode von der genannten Maschine (DEV) erzeugt wurde;
- Dekodieren des genannten ersten Bildchiffrierungscodes (QRC1) zum Erhalten des genannten bezifferten Datenelements (Cph);
- Dechiffrieren des genannten chiffrierten Datenelements (Cph) mittels eines privaten Schlüssels (Kpv), der in dem genannten Terminal (UE) gespeichert ist, wobei der genannte private Schlüssel (Kpv) ausgehend von einem zweiten Bildchiffrierungscode (QRC2) erhalten ist, der von der genannten Maschine (DEV) erzeugt ist,
wobei die genannte Prozessoreinheit (PR) darüber hinaus geeignet ist zum:
- Wiedergewinnen des zweiten Bildchiffrierungscodes (QRC2), umfassend den genannten privaten Schlüssel (Kpv);
- Dekodieren des genannten zweiten Bildchiffrierungscode (QRC2);
- Speichern des genannten privaten Schlüssels (Kpv).

14. System (SYS) zum Austausch eines bezifferten Datenelements zwischen einem Terminal (UE) und einer Maschine (DEV), wobei das genannte Datenelement umfasst:
- ein Terminal gemäß Anspruch 13; und
- eine Maschine (DEV), umfassend eine Prozessoreinheit (PR'), die geeignet ist zum:
- Erzeugen des genannten Bildchiffrierungscodes (QRC1), umfassend das genannte bezifferte Datenelement (Cph) ausgehend von einem öffentlichen Schlüssel (Kpu);
- Übertragen des genannten ersten Bildchiffrierungscodes (QRC1), umfassend das genannte bezifferte Datenelement (Cph), auf das genannte Terminal (UE) und / oder Anzeigen des genannten ersten Bildchiffrierungscodes (QRC1) auf einem Bildschirm.

15. Computerprodukt-Programm (PG), umfassend eine oder mehrere Anweisungssequenzen, die durch eine Einheit zur Informationsverarbeitung ausführbar sind, wobei die Ausführung der genannten Anweisungssequenzen ein Umsetzen des Austauschverfahrens eines bezifferten Datenelements gemäß irgendeinem der voranstehenden Ansprüche 1 bis 12 erlaubt, wenn es auf einen Computer geladen ist.

## Claims

1. Method (M) of encrypted data exchange (Cph) between a terminal (UE) and a machine (DEV), the method comprising the steps of:
- retrieving by the terminal (UE) of a first image encryption code (QRC1) comprising said encrypted data (Cph) using a public key (Kpu), said first image encryption code having been generated by said machine (DEV);
- decoding said first image encryption code (QRC1) in said terminal (UE) in order to obtain said encrypted data (Cph);
- decrypting said encrypted data (Cph) by means of a private key (Kpv) recorded in said terminal (UE), said private key (Kpv) having been obtained from a second image encryption code (QRC2) generated by said machine (DEV)
and the method comprising the initial steps of:
- retrieving by the terminal (UE) of the second image encryption code (QRC2) comprising said private key (Kpv);
- decoding said second image encryption code (QRC2) in said terminal (UE);
- recording said private key (Kpv) in said terminal (UE).

2. Method (M) according to claim 1, according to which the terminal (UE) is:
- a mobile telephone;
- a portable tablet.

3. Method CM) according to any preceding claim, according to which the first image encryption code (QRC1) and the second image encryption code (QRC2) are comprised:
- of a QR-Code®; or
- of a datamatrix; or
- of a barcode.

4. Method (M) according to any preceding claim, according to which the step of retrieving by the terminal (UE) of the first image encryption code (QRC1) is carried out by means of an image capture of said image encryption code (QRC1) on a screen of said machine (DEV) by said terminal (UE).

5. Method (M) according to any preceding claim 1 to 3, according to which the step of retrieving by the terminal (UE) of the first image encryption code (QRC1) is carried out by a reception of said image encryption code (QRC1) by said terminal (UE), image encryption code (QRC1) transmitted by said machine (DEV).

6. Method (M) according to any preceding claim, according to which the method comprises the additional step of decrypting the first image encryption code (QRC1) by means of a secret key (Ks),

7. Method (M) according to any preceding claim, according to which the encrypted data is a user password (MDP) allowing access to said machine (DEV).

8. Method (M) according to any preceding claim 1 to 6, according to which the encrypted data is a session identifier (LOGIN) and a user password (MDP) allowing access to a set of machines (DEV).

9. Method (M) according to any preceding claim 1 to 6, according to which the encrypted data is a string of random values (C_RND) for single used during an authentication of a terminal (UE) on a machine (DEV).

10. Method (M) according to any preceding claim, according to which the method comprises the additional step of generating from said machine (DEV) said first image encryption code (QRC1) comprising said encrypted data (Cph) using a public key (Kpu).

11. Method (M) according to any preceding claim, according to which the method comprises the additional step of transmitting from said machine (DEV) said first image encryption code (QRC1) comprising said encrypted data (Cph) to said terminal (UE).

12. Method (M) according to any preceding claim, according to which the method comprises the additional step of displaying from said machine (DEV) said first image encryption code (QRC1) on a screen of said machine (DEV).

13. Terminal (UE) adapted to exchange encrypted data with a machine (DEV), said terminal including a processor unit (PR) adapted to:
- retrieving a first image encryption code (QRC1) comprising said encrypted data (Cph) using a public key (Kpu), said first image encryption code having been generated by said machine (DEV);
- decoding said first image encryption code (QRC1) in order to obtain said encrypted data (Cph);
- decrypting said encrypted data (Cph) by means of a private key (Kpv) recorded in said terminal (UE), said private key (Kpv) having been obtained from a second image encryption code (QRC2) generated by said machine (DEV),
said processor unit (PR) being furthermore adapted to:
- retrieving the second image encryption code (QRC2) comprising said private key (Kpv);
- decoding said second image encryption code (QRC2);
- recording said private key (Kpv).

14. System (SYS) for encrypted data exchange between a terminal (UE) and a machine (DEV), said system including:
- a terminal according to claim 13; and,
- a machine (DEV) comprising a processor unit (PR') adapted to:
- generate said first image encryption code (QRC1) comprising said encrypted data (Cph) using a public key (Kpu).
- transmit said first image encryption code (QRC1) comprising said encrypted data (Cph) to said terminal (UE) and/or display said first image encryption code (QRC1) on a screen.

15. Computer program product (PG) including one or several instruction sequences that can be executed by a data processing unit, the execution of said instruction sequences allowing for an implementation of the method of encrypted data exchange according to any preceding claim 1 to 12, when it is loaded on a computer.
